# FASCICULE DE BREVET EUROPEEN

(11) **EP 1 614 562 B1**
(45) Date de publication et mention de la délivrance du brevet: **26.03.2008**
(21) Numéro de dépôt: 05105097.9
(22) Date de dépôt: 10.06.2005
(51) Int. Cl.: B60H 1/00

(54) **Module d'acheminement et de distribution d'air en provenance d'un ensemble thermique d'une installation de chauffage, de ventilation et/ou de climatisation pourhabitacle de vehicule**
Luftweg und -Verteilung einer Klima-Einheit in einem Kraftfahrzeug.
Air routing and distribution module for the climatisation installation in a motor vehicle.

(30) Priorité: 07.07.2004 FR 0407559
(43) Date de publication de la demande: 11.01.2006
(73) Titulaire: Valeo Systèmes Thermiques, 78321 Le Mesnil St Denis Cedex (FR)
(72) Inventeur: Droulez, Eric, 92150, Suresnes (FR); Pouysegur, Serge, 78610, Le Perray en Yvelines (FR); Truillet, Franck, 28410 Bu (FR)

(56) Documents cités:
- EP-A- 1 298 035
- EP-A- 1 338 494
- DE-A- 10 251 760
- US-A1- 2003 193 207
- US-B2- 6 497 432
- PATENT ABSTRACTS OF JAPAN vol. 006, no. 260 (M-180), 18 décembre 1982 (1982-12-18) & JP 57 155112 A (NIPPON DENSO KK), 25 septembre 1982 (1982-09-25)

## Description

### Domaine technique de l'invention.

L'invention est du domaine des installations de chauffage, de ventilation et/ou de climatisation pour habitacle de véhicule. Elle a pour objet un module d'acheminement et de distribution d'air en provenance d'un ensemble thermique vers différentes zones de l'habitacle du véhicule.

### Domaine technique de l'invention.

On rappelle qu'une installation de chauffage, de ventilation et/ou de climatisation pour habitacle de véhicule met en oeuvre un ensemble thermique et un pulseur pour provoquer une circulation d'air à travers l'ensemble thermique, puis à travers des conduits d'acheminement et de distribution de l'air qui sont affectés à différentes zones de l'habitacle. Ces zones de l'habitacle correspondent notamment au dégivrage du pare-brise et au désembuage des vitres latérales, et à des zones avant et arrière. Les zones avant comprennent habituellement des zones d'aération de l'assise, centrales et latérales droites et gauches, et des zones d'aération des pieds des usagers. Les zones arrière quant à elles comprennent des zones d'aération d'assise et des zones d'aération des pieds des occupants. On relèvera en outre une fonctionnalité accessoire recherchée, qui est de permettre une diffusion douce d'air à l'intérieur de l'habitacle, à travers des aérateurs spécifiques.

### Etat de la technique.

Un problème posé réside dans l'organisation générale des moyens mis en oeuvre pour l'acheminement et la distribution sélective de l'air vers l'une et/ou l'autre des zones de l'habitacle. Un exemple d'organisation est le document DE 102 51 760.

Il est habituel d'exploiter la présence d'un élément structurant de l'habitacle, tel qu'une planche de bord et/ou une poutre transversale avant, pour le passage de conduits d'acheminement de l'air vers les différentes zones de l'habitacle à aérer, auxquelles les conduits sont affectés. Des moyens de sélection manoeuvrables par les passagers du véhicule depuis l'habitacle permettent de distribuer l'air vers l'un et/ou l'autre de ces conduits.

Une difficulté à surmonter réside dans l'organisation tant des conduits que des moyens de sélection de la distribution d'air, qui doivent être d'un encombrement le plus réduit possible, tout en étant aisés à installer dans l'habitacle. On notera aussi l'intérêt recherché pour une telle organisation d'être aisément intégrable dans un quelconque habitacle, voire dans une zone relativement quelconque d'un habitacle, et d'être d'une structure simple et légère. En outre, les moyens mis en oeuvre pour l'acheminement et la distribution d'air ne doivent pas, pour un volume donné, induire de pertes de charge ni de nuisances sonores rédhibitoires. Par ailleurs, l'organisation de ces moyens ne doit pas porter atteinte à la simplicité de leur utilisation par les passagers pour provoquer la sélection de la distribution d'air souhaité, et doit prendre en compte les contraintes liées à une distribution d'air potentiellement adaptée selon les capacités de l'échange thermique ponctuellement réalisé. Enfin, l'organisation de ces moyens ne doit pas porter atteinte à une résistance mécanique idoine des éléments structurants de l'habitacle.

Il en ressort pour les concepteurs une recherche intuitive d'un compromis devant concilier l'ensemble de ces différentes contraintes, pour organiser au mieux les moyens d'acheminement et de distribution sélective d'air.

### Objet de l'invention.

Le but de la présente invention s'inscrit dans cette démarche de recherche de compromis, et propose un module d'acheminement et de distribution d'air en provenance d'un ensemble thermique d'une installation de chauffage, de ventilation et/ou de climatisation pour habitacle de véhicule, qui offre des solutions satisfaisantes au regard d'un tel compromis.

La démarche inventive de la présente invention a consisté dans sa globalité à organiser un module d'acheminement et de distribution d'air en au moins un caisson cloisonné, avantageusement intégrable à l'intérieur d'un élément structurant de l'habitacle du véhicule, tel qu'une poutre transversale de renfort de l'habitacle d'un véhicule, voire une planche de bord. On comprendra que le module de la présente invention est un ensemble fonctionnel indépendant de distribution d'air vers différentes zones de l'habitacle du véhicule, qui est en relation avec l'ensemble thermique de l'installation, et qui est avantageusement intégrable en soi à l'intérieur de l'élément structurant.

Ce caisson comprend un canal global d'admission de l'air en provenance de l'ensemble thermique, qui se subdivise ensuite en différents canaux respectivement affectés à l'alimentation en air, en premier lieu du dégivrage du pare-brise et du désembuage des vitres latérales, et en second lieu des zones avant, voire des zones arrière. Un répartiteur, monté mobile à l'intérieur du caisson, est placé sur le trajet du canal global pour distribuer l'air vers l'un ou l'autre de canaux affectés à l'alimentation en air de ces zones de l'habitacle.

Le canal global constitue une chambre commune d'admission d'air pour l'ensemble des zones avant à aérer, notamment celles d'un premier groupe comprenant les zones centrales et latérales, voire aussi la zone de pieds, et celles d'un deuxième groupe comprenant le dégivrage du pare-brise et le désembuage des vitres latérales, voire éventuellement la diffusion douce. Ce canal global est en relation avec des canaux principaux qui sont respectivement affectés à l'alimentation en air de chacun de ces groupes, un répartiteur principal de sélection du passage de l'air, fonctionnant indifféremment en tout-ou-rien ou en distribution d'air progressive, étant interposé entre les canaux principaux. On notera à ce stade de la description qu'un tel répartiteur est susceptible d'être constitué d'un répartiteur principal commun, ou d'être subdivisé en deux répartiteurs principaux élémentaires respectivement affectés à l'un et l'autre des canaux principaux. Pour ce qui concerne l'alimentation en air des zones arrière, le caisson est en outre exploité pour permettre un acheminement de l'air vers les zones d'assise et de pieds arrière, par exemple.

Selon une première variante, le canal global est subdivisé en deux canaux élémentaires premier et deuxième respectivement affectés à l'alimentation en air des zones avant, tant du premier groupe que celles du deuxième groupe à l'instar des dispositions correspondantes susvisées, et à l'alimentation en air des zones arrière, tant d'assise que de pied.

On comprendra que selon une telle forme de réalisation, chaque canal élémentaire constitue un canal global d'alimentation de l'ensemble des zones respectivement avant et arrière.

On notera qu'il est préféré d'isoler l'alimentation en air des zones de pied avant de celles des autres zones avant, en plaçant un répartiteur secondaire de distribution sélective d'air entre un premier canal intermédiaire affecté à l'alimentation en air du premier groupe de zones avant et un deuxième canal intermédiaire affecté à l'alimentation en air de la zone de pied avant.

Selon une deuxième variante, l'alimentation en air de la zone arrière est réalisée à partir du canal principal affecté à l'alimentation en air du premier groupe susvisé des zones avant. Dans ce cas, et selon une variante spécifique de réalisation, il est facultativement proposé d'isoler l'alimentation en air des zones de pieds avant et arrière, par rapport à celles des autres zones avant et arrière. A cet effet, un répartiteur complémentaire est placé en sortie du canal global, en amont du répartiteur principal, pour la distribution sélective d'air indifféremment en tout-ou-rien ou en distribution d'air progressive, vers des canaux complémentaires respectivement affectés à l'alimentation en air des canaux principaux d'une part et des zones de pieds avant et arrière d'autre part.

Selon un autre aspect de la présente invention, il est aussi proposé d'exploiter le caisson pour permettre en outre une diffusion douce d'air à travers des canaux spécifiques. Cette diffusion douce est de préférence alimentée en air à partir du premier canal principal, et plus particulièrement à partir de l'alimentation en air pour le dégivrage du pare-brise.

On notera que l'invention porte aussi sur l'intégration d'un module susvisé indépendant à l'intérieur d'un élément structurant de l'habitacle d'un véhicule, et plus particulièrement à l'intérieur d'une poutre de renfort ou d'une planche de bord. Un tel élément structurant, poutre et/ou planche, est principalement reconnaissable en ce qu'il est équipé de moyens de réception du caisson dans son volume interne, et qu'il comporte à travers ses parois des fenêtres pour le passage de l'air, tant d'admission que d'évacuation vers des aérateurs, qui sont en relation avec les différents canaux que comporte le caisson, et notamment ceux qui ont été énoncés.

Se pose le problème du montage d'un caisson de la présente invention à l'intérieur d'un élément structurant tel que constitué d'une poutre de renfort de l'habitacle du véhicule. Pour permettre un tel montage aisé, il est avantageusement proposé de composer le caisson à partir d'une pluralité de coquilles assemblées entre elles. Une telle structure en coquilles du caisson permet l'introduction de ce dernier à l'intérieur de la poutre à partir de ses extrémités, pour finalement autoriser le montage du caisson à l'intérieur de la poutre sans pour autant porter atteinte à l'intégrité de sa résistance mécanique.

Plus particulièrement, les coquilles sont réparties en éléments respectivement au moins d'extrémité droit et gauche, voire aussi médian, qui sont longitudinalement aboutés.

Dans le cas où la poutre comporte un obstacle à la circulation longitudinale des coquilles à l'intérieur de la poutre, tel qu'un recoin pour le passage d'un organe du véhicule et plus particulièrement d'une colonne de direction ou un airbag, il est notamment proposé de ménager dans l'un au moins des éléments composant le caisson, et notamment dans un élément d'extrémité, au moins un rétreint pour le passage de cet obstacle.

Dans le cas où ce rétreint est situé en zone médiane d'un premier élément, ce dernier est avantageusement fractionné en deux demi-coquilles longitudinalement ouvertes dont l'une comporte le rétreint. Ces dispositions sont telles que la demi-coquille comportant le rétreint peut être introduite et installée à l'intérieur de la poutre nonobstant la présence de l'obstacle que cette dernière comporte, l'autre demi-coquille étant ensuite introduite et installée à l'intérieur de la poutre.

Pour faciliter l'assemblage en aveugle à l'intérieur de la poutre des demi-coquilles entre elles, il est de préférence proposé d'incliner longitudinalement les bords des ouvertures des demi-coquilles.

Les demi-coquilles comportent notamment en bordure de leur ouverture longitudinale des organes d'emboîtements coopérants pour leur assemblage l'une à l'autre.

Les organes d'emboîtement coopérants sont plus particulièrement constitués d'un jeu de glissières et de rails coopérants, ou organes d'emboîtement analogues, qui sont respectivement ménagés en bordure longitudinale des ouvertures des demi-coquilles, pour faciliter leur guidage relatif lors de l'assemblage de ces dernières.

De préférence, les organes d'emboîtement présentent des faces coopérantes non parallèles pour favoriser le serrage et l'étanchéité de l'assemblage des demi-coquilles l'une à l'autre.

Le rétreint étant situé en zone d'extrémité d'un élément, pour le passage d'un airbag par exemple, cet élément est indifféremment formé à partir d'une même ou de plusieurs coquilles.

Selon une variante particulière de réalisation, deux éléments voisins comportent un rétreint adjacent de l'un à l'autre des éléments, pour délimiter conjointement un logement pour le passage d'un organe du véhicule, et notamment pour loger conjointement un airbag, un calculateur, une boîte à gants ou autre organe du véhicule habituellement placé dans cette zone de l'habitacle.

De préférence, le caisson comprend au moins une coquille d'embout de fermeture de son extrémité correspondante. Cette coquille d'embout est avantageusement mise à profit pour ménager un cloisonnement interne du caisson. Plus particulièrement, cette coquille d'embout comporte au moins une aile pour cloisonner au moins une autre coquille, de sorte à constituer au moins un canal interne dans le caisson.

On notera que pour la fixation des coquilles à l'intérieur de la poutre, celles-ci comportent par exemple des trous pour le passage d'organes de fixation des coquilles sur la poutre.

### Description des figures.

La présente invention sera mieux comprise à la lecture de la description qui va en être faite d'exemples préférés de réalisation, en relation avec les figures des planches annexées, dans lesquelles :
La fig.1 est un schéma illustrant un exemple d'installation d'un module de la présente invention, à l'intérieur d'une poutre transversale d'un habitacle de véhicule.
La fig.2 est un schéma illustrant l'organisation d'un module de la présente invention, selon des modalités préférées de réalisation.
La fig.3 est un schéma illustrant une première variante de réalisation d'un module de la présente invention.
Les fig.4 et fig.5 sont des illustrations d'un module selon la variante de réalisation représentée sur la fig.3, respectivement en vue de dessus et en vue de côté.
La fig.6 est un schéma illustrant une deuxième variante de réalisation d'un module de la présente invention.
Les fig.7, fig.8 et fig.9 sont des illustrations d'un module selon la variante de réalisation représentée sur la fig.6, respectivement en perspective, en vue de côté et en vue de dessus.
La fig.10 est un schéma illustrant une troisième variante de réalisation d'un module de la présente invention.
Les fig.11, fig.12 et fig.13 sont des illustrations d'un module selon la variante de réalisation représentée sur la fig.10, respectivement en vue de côté, en vue de dessus et en coupe transversale.
La fig.14 est un schéma illustrant une quatrième variante de réalisation d'un module de la présente invention.
Les fig.15, fig.16 et fig.17 sont des illustrations d'un module selon la variante de réalisation représentée sur la fig.14, respectivement en vue de côté, en vue de dessus et en coupe transversale.
La fig.18 est une illustration en coupe d'un caisson que comprend un module de la présente invention, installé à l'intérieur d'une poutre de renfort de l'habitacle du véhicule.
La fig.19 est une illustration en perspective éclatée d'une forme préférée de réalisation d'un caisson représenté sur la fig.18.
La fig.20 est une illustration en coupe des modalités d'assemblage entre deux demi-coquilles que comprend le caisson représenté sur la fig.19.

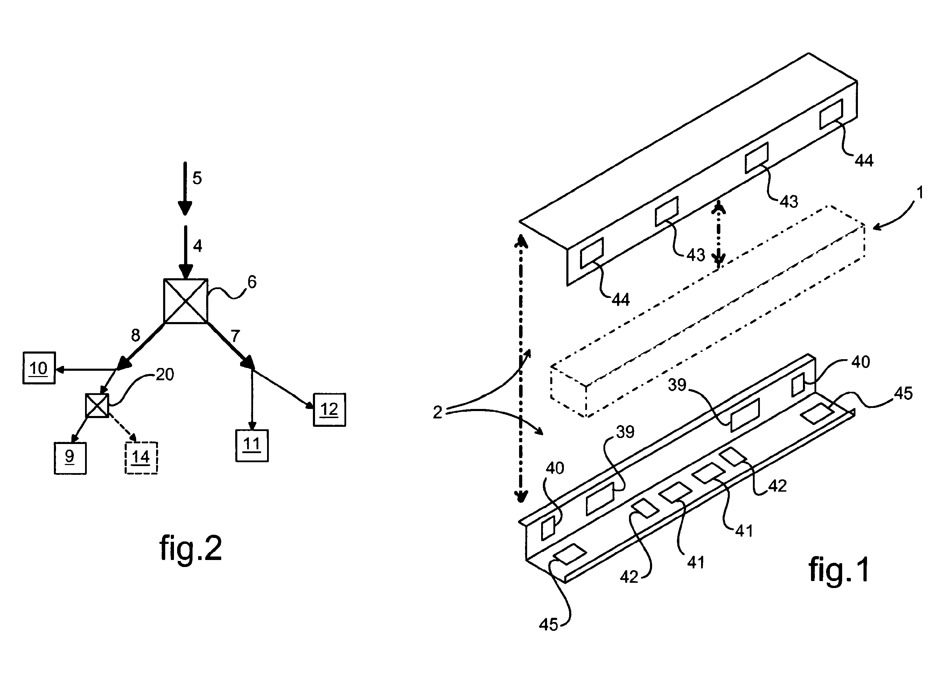

Sur la fig.1, un module 1 d'acheminement et de distribution d'air en provenance d'un ensemble thermique d'une installation de chauffage, de ventilation et/ou de climatisation, est notamment destiné à être installé à l'intérieur d'un élément structurant 2 d'un habitacle de véhicule, poutre structurante transversale avant ou planche de bord notamment. En se reportant par ailleurs sur les autres figures, ce module est principalement reconnaissable en ce qu'il comprend au moins un caisson cloisonné, tels que 3, qui délimite une pluralité de conduits qui sont respectivement affectés à l'alimentation en air des zones de l'habitacle. On notera à ce stade de la description des exemples de réalisation illustrés, que les caissons 3 composant le module de l'invention sont au nombre de deux, respectivement disposés dans les zones droite et gauche de l'élément structurant 2. Le caisson 3 délimite plus particulièrement un canal global 4 d'admission, qui est en relation avec l'ensemble thermique, par l'intermédiaire par exemple d'un conduit d'alimentation d'air 5. Ce canal global 4 est équipé d'au moins un répartiteur principal 6, ou organe analogue, de distribution de l'air admis sélectivement vers des canaux principaux de distribution 7 et 8. Ces derniers 7 et 8 sont en communication par l'intermédiaire de débouchés respectifs avec au moins une desdites zones de l'habitacle auxquelles ces débouchés sont affectés. On comprendra que ces débouchés correspondent aux orifices correspondants de conduits mis en relation avec les différents canaux du caisson pour l'acheminement d'air vers les zones de l'habitacle à aérer.

Les canaux principaux 7 et 8 sont de préférence au moins répartis en un premier canal principal 8 affecté au moins à l'alimentation en air du dégivrage du pare-brise 9 et du désembuage 10 des vitres latérales, et un deuxième canal principal 7 affecté au moins à l'alimentation en air de la zone avant de l'habitacle, centrale 11 et latérale 12 des assises avant notamment.

Selon un autre aspect de la présente invention, le premier canal principal 8 qui est notamment affecté au moins à l'alimentation en air du dégivrage du pare-brise 9, peut en outre être affecté à l'alimentation en air d'une diffusion douce 14.

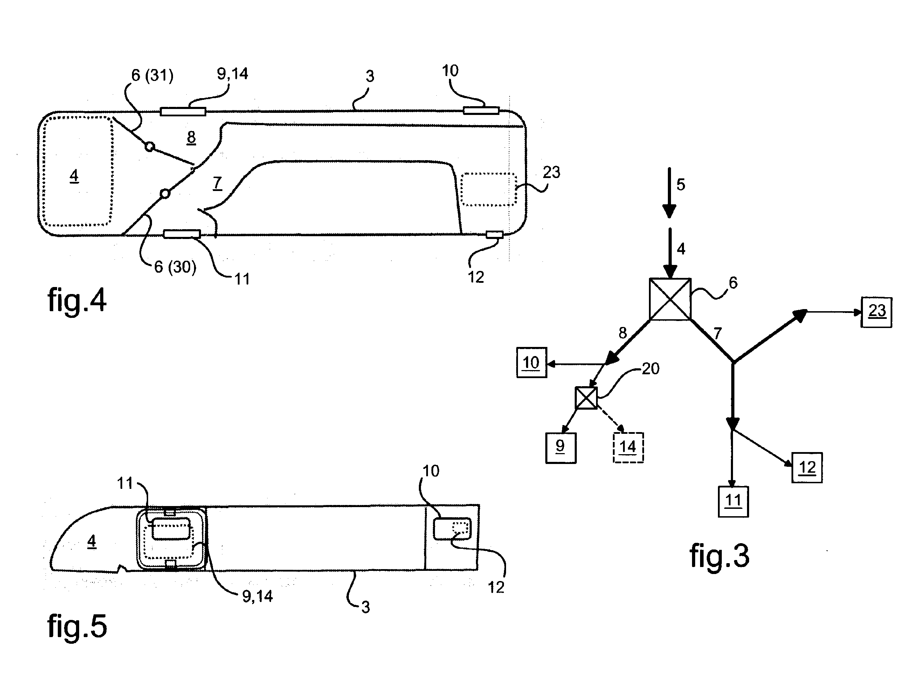

Sur la variante de réalisation illustrée sur les fig.3 à fig.5, le deuxième canal principal 7 est en outre affecté à l'alimentation en air de la zone d'aération arrière 23 de l'habitacle.

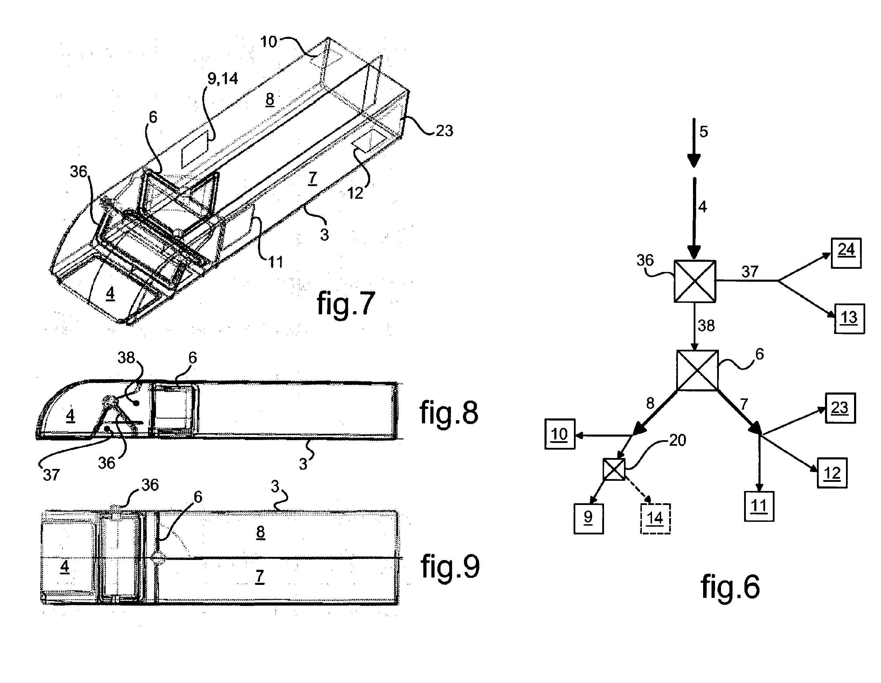

Sur la variante de réalisation illustrée sur les fig.6 à fig.9, le canal global 4 est en communication sélective, par l'intermédiaire d'un répartiteur complémentaire 36, avec des canaux complémentaires 37 et 38. Un premier canal complémentaire 37 est affecté à la distribution d'air vers les zones de pieds avant 13 et arrière 24. Un deuxième canal complémentaire 38 est affecté à la distribution d'air conjointement vers les premier et deuxième canaux principaux 8,7, par l'intermédiaire du répartiteur principal 6. L'aération de la zone d'assise arrière 23 est quant à elle réalisée à partir du deuxième canal principal 7.

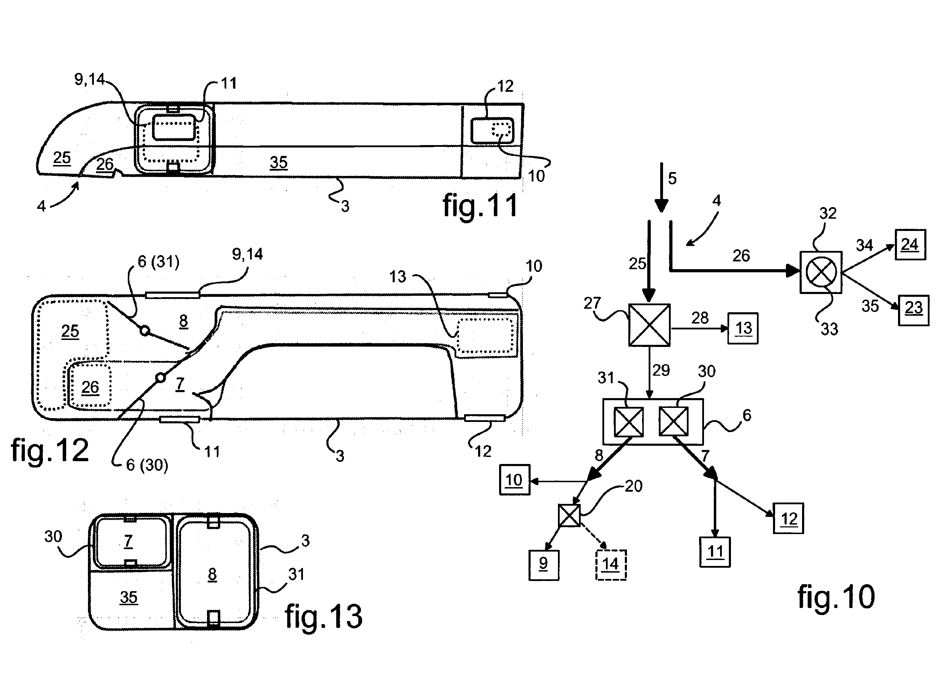

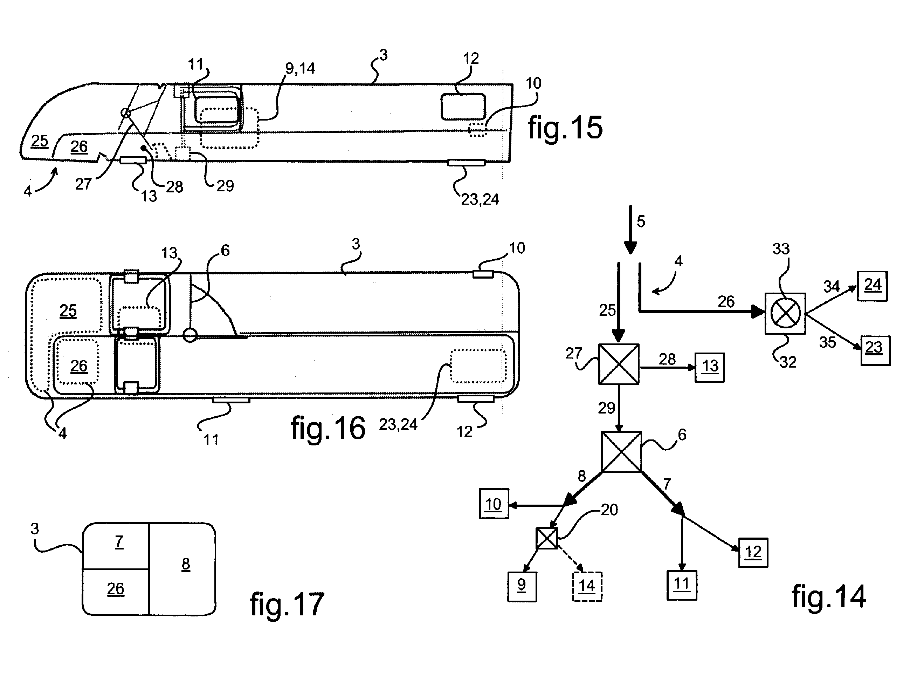

Sur les variantes de réalisation illustrées sur les fig.10 à fig.13 d'une part, et sur les fig.14 à fig.17 d'autre part, le canal global 4 d'admission est subdivisé au moins en deux canaux élémentaires 25 et 26, qui sont respectivement affectés pour un premier canal élémentaire 25 à l'aération des différentes zones avant 9,10,11,12,13 et pour un deuxième canal élémentaire 26 à l'aération des différentes zones arrière 23 et 24. Préférentiellement selon ces dernières variantes, le premier canal élémentaire 25 est en communication, par l'intermédiaire d'un répartiteur secondaire 27, sélectivement avec un premier canal intermédiaire 28 affecté à la distribution d'air vers les zones de pied avant 13, et avec un deuxième canal intermédiaire 29 équipé dudit répartiteur principal 6.

On notera au vu de ces dernières variantes, que d'une manière générale le répartiteur principal 6 est susceptible d'être un répartiteur unique, tel qu'illustré sur les fig.14 à fig.17, ou encore être subdivisé en un premier répartiteur élémentaire 30 affecté au deuxième canal principal 7 et un deuxième répartiteur 31 affecté au premier canal principal 8, pour alternativement leur ouverture et/ou leur fermeture, tel que selon la variante illustrée sur les fig.10 à fig.13.

En revenant à la fig.1, le caisson 3 est avantageusement équipé de moyens pour sa réception à l'intérieur d'un élément structurant de l'habitacle du véhicule, et plus particulièrement d'une poutre transversale 2 de renfort de l'habitacle. Ces moyens sont par exemple des moyens de fixation par vissage, par emboîtement ou autres moyens analogues. On notera sur l'exemple de réalisation illustré l'organisation de la poutre 2 en deux demi-profilés qui sont assemblés l'un à l'autre pour permettre l'installation aisée du module 1, caisson 3 notamment. La poutre 2 comprend aussi des fenêtres de passage de l'air, qui sont en relation avec les différents débouchés d'admission et d'évacuation d'air du module de distribution.

Sur l'exemple de réalisation illustré, la poutre 2, et d'une manière générale un élément structurant de l'habitacle du véhicule, comporte plus particulièrement:
- un premier jeu d'au moins une fenêtre 39 qui est ménagée à travers sa paroi arrière, orientée vers le tablier de l'habitacle, et qui est destinée à l'alimentation en air du dégivrage du pare-brise 9 et/ou de la diffusion douce 14,
- un deuxième jeu de fenêtres 40 ménagées à travers sa paroi arrière et destinées à l'alimentation en air du désembuage des vitres latérales 10,
- un troisième jeu d'au moins une fenêtre 41 ménagée à travers sa paroi inférieure et destinée à l'alimentation en air du caisson 3,
- accessoirement un quatrième jeu de fenêtres 42 ménagées à travers sa paroi inférieure et destinées à la distribution d'air vers les zones de pieds 13 et 24, respectivement avant et arrière,
- un cinquième jeu de fenêtres 43 et 44 ménagées à travers sa paroi frontale et destinées à la distribution d'air respectivement vers les différentes zones d'aération d'assise avant 11,12 de l'habitacle, aération centrale 43 et aération latérale 44 notamment, et
- un sixième jeu de fenêtres 45 ménagées à travers sa paroi inférieure et destinées à la distribution d'air vers les zones arrière d'assise 23 et de pieds 24.

Dans une autre variante, le deuxième jeu de fenêtres 40 est ménagé dans la paroi supérieure de l'élément structurant, c'est-à-dire directement au regard de la façade de planche de bord ou du pare-brise du véhicule.

On comprendra qu'une planche de bord organisée pour recevoir un module de la présente invention est reconnaissable en ce qu'elle comporte des dispositions similaires à celles qui viennent d'être décrites relatives à l'organisation de la poutre, notamment au regard des jeux de fenêtres que cette dernière comporte.

On notera que sans déroger aux règles de l'invention qui ont été énoncées, le caisson est indifféremment susceptible d'être constitué d'un caisson unique, ou d'être subdivisé en plusieurs caissons élémentaires coopérants pour la distribution d'air vers l'ensemble des zones de l'habitacle, et notamment en caissons élémentaires répartis droit et gauche.

On notera aussi que le caisson est préférentiellement réalisé en matière plastique injecté, polypropylène talqué à 20% ou polypropylène de haute cristallinité (HCP) notamment, de sorte qu'il présente à la fois des caractéristiques de légèreté avantageuse et de résistance mécanique idoine.

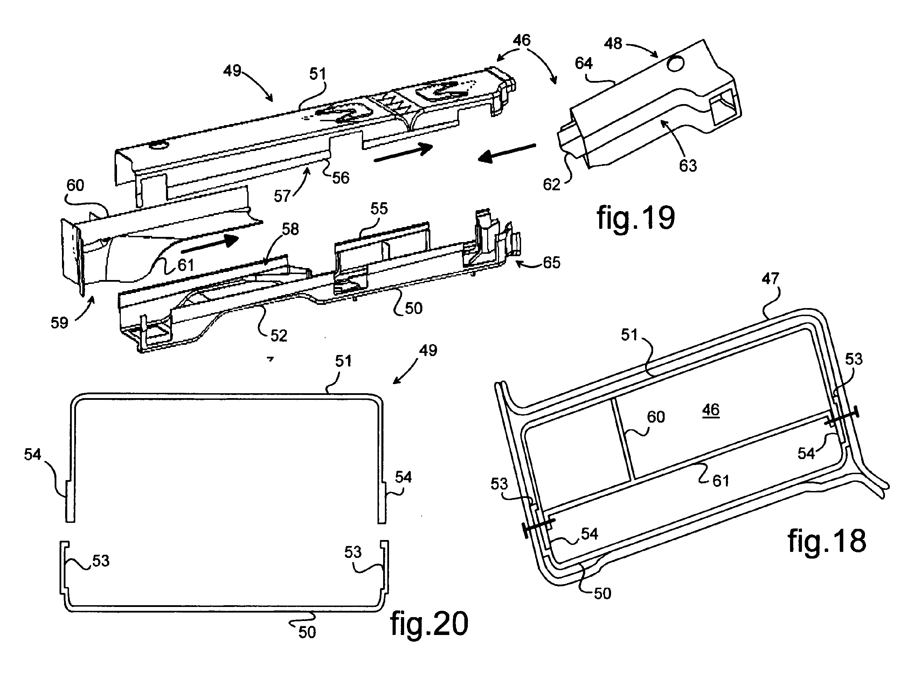

Sur la fig.18, un caisson 46 que comprend un module de la présente invention est installé à l'intérieur d'une poutre 47 de renfort de l'habitacle du véhicule. Sur la fig.19, ce caisson 46 est composé de deux éléments d'extrémité droit 48 et gauche 49, qui sont organisés de manière à permettre leur montage à l'intérieur de la poutre 47 par les extrémités de cette dernière. Ces éléments de caisson 48 et 49 sont chacun agencés en coquilles assemblées entre elles.

Plus particulièrement concernant l'élément gauche 49, et sur les fig.19 et fig.20, celui-ci est composé de deux demi-coquilles longitudinales 50 et 51. L'une 50 de ces demi-coquilles comporte un rétreint 52 destiné au passage d'un obstacle que comporte la poutre 47, tel qu'un recoin pour le passage d'une colonne de direction du véhicule. Cet organisation de l'élément en deux demi-coquilles 50 et 51 permet l'introduction de la demi-coquille 50 comportant le rétreint 52 à l'intérieur de la poutre 47 nonobstant la présence de l'obstacle que comporte cette dernière. Puis, cette installation étant effectuée, la deuxième demi-coquille 51 est ensuite introduite à l'intérieur de la poutre 47 par glissement sur la première demi-coquille 50. L'assemblage des demi-coquilles 50 et 51 entre elles est réalisée par l'intermédiaire d'un jeu de glissières 53 et de rails 54 coopérants, permettant une telle introduction par glissement de la deuxième demi-coquille 51, et offrant une jonction étanche entre les demi-coquilles 50 et 51. Par ailleurs sur la fig.19, les bords longitudinaux 55 et 56 des ouvertures 57 et 58 des demi-coquilles 50 et 51 sont longitudinalement inclinés, pour faciliter l'introduction de la deuxième demi-coquille 51 par glissement sur la première demi-coquille 50 à partir de l'extrémité correspondante de la poutre 47.

Les demi-coquilles sont assemblées entre elles par vissage ou analogue, après notamment leur emboîtement l'une sur l'autre par glissement longitudinal de la demi-coquille 51 sur la demi-coquille 50. Plus particulièrement, au moins un élément de jonction, vis notamment non représentée, est en prise en chevauchement sur l'une et l'autre des demi-coquilles 50,51 pour leur fixation l'une à l'autre.

Selon une variante avantageuse de réalisation, cette assemblage des demi-coquilles 50,51 entre elles est réalisé après leur introduction à l'intérieur de l'élément structurant, depuis l'extérieur de ce dernier, de sorte que l'élément de jonction des coquilles l'une à l'autre est en outre un élément de jonction des coquilles à l'élément structurant. Il en ressort qu'à partir d'une même opération de fixation, et d'au moins un même élément de jonction, non seulement les demi-coquilles 50,51 sont assemblées l'une à l'autre, mais celles-ci sont aussi assemblées à l'élément structurant.

Sur la fig.19, l'élément gauche 49 du caisson est équipé d'une coquille d'embout 59 pour la fermeture de l'extrémité correspondante du caisson. Cette coquille d'embout 59 comporte des ailes 60 et 61 destinées à s'étendre à l'intérieur de l'élément gauche 49 du caisson pour son cloisonnement.

De préférence, des renforts sont ménagés dans l'une au moins des ailes de cloisonnement 60,61 pour la réception de l'élément de jonction au moins destiné à l'assemblage des demi-coquilles entre elles et préférentiellement à l'élément structurant. Ces dispositions visent à fixer et à maintenir fermement les ailes de cloisonnement pour éviter des vibrations, le tout en une seule opération d'assemblage.

L'élément droit 48 est constitué d'une coquille 64 fermée à son extrémité droite, qui loge un élément de cloisonnement interne 62.

Les éléments droit 48 et gauche 49 comportent chacun des rétreints 63 et 65, qui débouchent à leur extrémité en regard. Ces rétreints 63 et 65 forment conjointement un logement de réception d'un airbag.

## Revendications

1. Module d'acheminement et de distribution d'air en provenance d'un ensemble thermique d'une installation de chauffage, de ventilation et/ou de climatisation pour habitacle de véhicule, qui comprend au moins un caisson (3) cloisonné qui délimite une pluralité de conduits respectivement affectés à l'alimentation en air des zones de l'habitacle, ce caisson (3) délimitant un canal global (4) d'admission qui est en relation avec l'ensemble thermique, et étant équipé d'au moins un répartiteur principal (6) de distribution de l'air admis sélectivement vers des canaux principaux (7, 8) de distribution qui sont en communication par l'intermédiaire de débouchés respectifs avec au moins une des dites zones de l'habitacle auxquelles ces débouchés sont affectés, **caractérisé en ce que** ledit module est intégrable à l'intérieur d'un élément structurant d'un véhicule automobile.

2. - Module d'acheminement et de distribution d'air selon la revendication 1, **caractérisé en ce que** les canaux principaux (7,8) sont au moins répartis en un premier canal principal (8) affecté au moins à l'alimentation en air du dégivrage du pare-brise (9) et au désembuage des vitres latérales (10), et un deuxième canal principal (7) affecté au moins à l'alimentation en air de la zone avant de l'habitacle (11, 12).

3. - Module d'acheminement et de distribution d'air selon la revendication 2, **caractérisé en ce que** le premier canal principal (8) est en outre affecté à une alimentation en air d'une diffusion douce (14).

4. Module d'acheminement et de distribution d'air selon l'une quelconque des revendications 2 et 3, **caractérisé en ce que** le deuxième canal principal (7) est en outre affecté à l'alimentation en air de la zone d'aération arrière de l'habitacle (13).

5. Module d'acheminement et de distribution d'air selon l'une quelconque des revendications 2 à 4, **caractérisé en ce que** le canal global (4) est en communication sélective, par l'intermédiaire d'un répartiteur complémentaire (36), avec des canaux complémentaires (37, 38), un premier canal complémentaire (37) étant affecté à la distribution d'air vers les zones de pieds (13, 24) avant et arrière, et un deuxième canal complémentaire (38) étant affecté à la distribution d'air conjointement vers les premier et deuxième canaux principaux (8,7), par l'intermédiaire du répartiteur principal (6), l'aération de la zone d'assise arrière (23) étant réalisée à partir du deuxième canal principal (7).

6. - Module d'acheminement et de distribution d'air selon l'une quelconque des revendications précédentes, **caractérisé en ce que** le canal global (4) d'admission est subdivisé au moins en deux canaux élémentaires (25, 26) respectivement affectés pour un premier canal élémentaire (25) à l'aération des différentes zones avant (9, 10, 11, 12, 13), et pour un deuxième canal élémentaire (26) à l'aération des différentes zones arrière (23, 24).

7. Module d'acheminement et de distribution d'air selon la revendication 6, **caractérisé en ce que** le premier canal élémentaire (25) est en communication, par l'intermédiaire d'un répartiteur secondaire (27), sélectivement avec un premier canal intermédiaire (28) affecté à la distribution d'air vers les zones de pieds avant (13), et avec un deuxième canal intermédiaire (29) équipé dudit répartiteur principal (6).

8. - Module d'acheminement et de distribution d'air selon l'une quelconque des revendications précédentes, **caractérisé en ce que** le répartiteur principal (6) est subdivisé en un premier répartiteur élémentaire (30) affecté au deuxième canal principal (7) et un deuxième répartiteur élémentaire affecté au premier canal principal (8).

9. Module d'acheminement et de distribution d'air selon l'une quelconque des revendications 1 à 8, **caractérisé en ce qu'**il est équipé de moyens pour sa réception à l'intérieur d'une poutre transversale (2) de l'habitacle, cette dernière (2) comportant des fenêtres de passage de l'air en relation avec les différents débouchés d'admission et d'évacuation d'air.

10. Module d'acheminement et de distribution d'air selon l'une quelconque des revendications précédentes, **caractérisé en ce que** le caisson (46) étant organisé pour être logé à l'intérieur d'un élément structurant constitué d'une poutre de renfort (47) de l'habitacle du véhicule, celui-ci (46) est composé d'une pluralité de coquilles (50, 51, 59, 64) assemblées entre elles.

11. - Module d'acheminement et de distribution d'air selon la revendication 10, **caractérisé en ce que** les coquilles (50, 51, 59, 64) sont réparties en éléments respectivement au moins d'extrémité droit (48) et gauche (49), voire aussi médian, qui sont longitudinalement aboutés.

12. - Module d'acheminement et de distribution d'air selon la revendication 11, **caractérisé en ce qu'**au moins un dit élément (48, 49) comporte au moins un rétreint (52, 63, 64) pour le passage d'un obstacle que comporte la poutre (47).

13. - Module d'acheminement et de distribution d'air selon la revendication 12, **caractérisé en ce que** le rétreint (52) étant situé en zone médiane d'un premier élément (49), ce dernier est fractionné en deux demi-coquilles (50, 51) longitudinalement ouvertes dont l'une (50) comporte le rétreint (52).

14. - Module d'acheminement et de distribution d'air selon la revendication 12, **caractérisé en ce que** les bords (55, 56) des ouvertures (57, 58) des demi-coquilles (50, 51) sont longitudinalement inclinés.

15. - Module d'acheminement et de distribution d'air selon l'une quelconque des revendications 13 et 14, **caractérisé en ce que** les demi-coquilles (50, 51) comportent en bordure de leur ouvertures longitudinales des organes d'emboîtements coopérants (53, 54) pour leur assemblage l'une à l'autre.

16. - Module d'acheminement et de distribution d'air selon la revendication 15, **caractérisé en ce que** les organes d'emboîtement coopérants sont constitués d'un jeu de glissières (53) et de rails (54) coopérants, qui sont respectivement ménagés en bordure longitudinale des ouvertures (57, 58) des demi-coquilles (50, 51) pour faciliter leur guidage relatif lors de l'assemblage de ces dernières.

17. - Module d'acheminement et de distribution d'air selon l'une quelconque des revendications 15 et 16, **caractérisé en ce que** les organes d'emboîtement (53, 54) présentent des faces coopérantes non parallèles pour favoriser le serrage et l'étanchéité de l'assemblage des demi-coquilles (50, 51) l'une à l'autre.

18. - Module d'acheminement et de distribution d'air selon la revendication 17, **caractérisé en ce que** deux éléments voisins (48, 49) comportent un rétreint (63, 65) adjacent de l'un à l'autre des éléments (48, 49), pour délimiter conjointement un logement pour le passage d'un organe du véhicule.

19. - Module d'acheminement et de distribution d'air selon l'une quelconque des revendications 10 à 18, **caractérisé en ce que** le caisson comprend au moins une coquille d'embout (59) de fermeture de son extrémité correspondante.

20. - Module d'acheminement et de distribution d'air selon la revendication 27, **caractérisé en ce que** la coquille d'embout (59) comporte au moins une aile (60, 61) pour cloisonner au moins une autre coquille (50, 51) de sorte à constituer au moins un canal interne dans le caisson.

21. - Module d'acheminement et de distribution d'air selon la revendication 13, **caractérisé en ce que** les demi-coquilles (50, 51) sont assemblées entre elles par un élément de jonction en prise en chevauchement sur l'une et l'autre des demi-coquilles (50, 51).

22. - Module d'acheminement et de distribution d'air selon la revendication 21, **caractérisé en ce que** l'élément de jonction des coquilles (50, 51) l'une à l'autre est en outre un élément de jonction des coquilles (50, 51) à l'élément structurant.

23. - Module d'acheminement et de distribution d'air selon les revendications 20 et 21, **caractérisé en ce que** des renforts sont ménagés dans l'une au moins des ailes de cloisonnement (60, 61) pour la réception de l'élément de jonction au moins destiné à l'assemblage des demi-coquilles (50, 51) entre elles.

24. - Elément structurant d'un habitacle de véhicule **caractérisé en ce qu'**il intègre un module d'acheminement et de distribution d'air selon l'une quelconque des revendications précédentes.

25. - Elément structurant d'un habitacle de véhicule selon la revendication 24,
**caractérisé en ce qu'**il comporte :
- un premier jeu d'au moins une fenêtre (39) qui est ménagée à travers sa paroi arrière, orientée vers le tablier de l'habitacle, et qui est destinée à l'alimentation en air du dégivrage du pare-brise (9) et de la diffusion douce (14),
- un deuxième jeu de fenêtres (40) ménagées à travers sa paroi arrière est destinées à l'alimentation en air du désembuage des vitres latérales (10),
- un troisième jeu d'au moins une fenêtre (41) ménagée à travers sa paroi inférieure et destinée à l'alimentation en air du caisson (3),
- un quatrième jeu de fenêtres (42) ménagées à travers sa paroi inférieure et destinées à la distribution d'air vers les zones de pieds (13, 24), respectivement avant et arrière,
- un cinquième jeu de fenêtres (43, 44) ménagées à travers sa paroi frontale et destinées à la distribution d'air respectivement vers les différentes zones d'aération d'assise avant (11, 12) de l'habitacle, et
- un sixième jeu de fenêtres (45) ménagées à travers sa paroi inférieure et destinées à la distribution d'air vers les zones arrière d'assise (23) et de pieds (24).

26. - Elément structurant d'un habitacle de véhicule selon la revendication 24,
**caractérisé en ce qu'**il comporte :
- un premier jeu d'au moins une fenêtre (39) qui est ménagée à travers sa paroi arrière, orientée vers le tablier de l'habitacle, et qui est destinée à l'alimentation en air du dégivrage du pare-brise (9) et de la diffusion douce (14),
- un deuxième jeu de fenêtres (40) ménagées à travers sa paroi arrière et destinées à l'alimentation en air du désembuage des vitres latérales (10),
- un troisième jeu d'au moins une fenêtre (41) ménagée à travers sa paroi inférieure et destinée à l'alimentation en air du caisson (3),
- un cinquième jeu de fenêtres (43, 44) ménagées à travers sa paroi frontale et destinées à la distribution d'air respectivement vers les différentes zones d'aération d'assise avant (11, 12) de l'habitacle, et
- un sixième jeu de fenêtres (45) ménagées à travers sa paroi inférieure et destinées à la distribution d'air vers les zones arrière d'assise (23) et de pieds (24).

27. - Elément structurant d'un habitacle de véhicule selon l'une quelconque des revendications 24 à 26, **caractérisé en ce qu'**il est une poutre transversale de renfort de l'habitacle du véhicule.

## Claims

1. Module for routing and distributing air coming from a heat transfer unit of a heating, ventilating and/or air conditioning system for a car interior, which includes at least one partitioned plenum (3) which defines a plurality of ducts assigned, respectively, to supply air to zones of the car interior, this plenum (3) defining a universal inlet conduit (4) which is associated with the heat transfer unit, and being equipped with at least one primary splitter (6) for selectively distributing the inlet air towards primary distribution, conduits (7, 8) which are connected, by means of respective outlets, to at least one of said zones of the car interior to which these outlets are assigned, **characterised in that** said module can be integrated into a structural member of a motor vehicle.

2. Air distribution and routing module of claim 1, **characterised in that** the primary conduits (7, 8) are at least divided into a first primary conduit (8) assigned to at least supply air for defrosting the windscreen (9) and for demisting the side car windows (10), and a second primary conduit (7) assigned to at least supply air to the front zone of the car interior (11, 12).

3. Air distribution and routing module of claim 2, **characterised in that** the first primary conduit (8) is further assigned to supply air for gentle diffusion (14).

4. Air distribution and routing module as claimed in any of claims 2 and 3, **characterised in that** the second primary conduit (7) is further assigned to supply air to the rear aeration zone of the car interior (13).

5. Air distribution and routing module as claimed in any of claims 2 to 4, **characterised in that** the universal conduit (4) is selectively connected to additional conduits (37, 38), by means of an additional splitter (36), a first additional conduit being assigned to distribute air to the front and rear feet zones (13, 24), and a second additional conduit (38) being assigned to distribute air to both the first and second primary conduits (8, 7), by means of the primary splitter (6), aeration of the rear seat zone (23) being carried out via the second primary conduit (7).

6. Air distribution and routing module as claimed in any of the preceding claims, **characterised in that** the universal inlet conduit (4) is subdivided into at least two basic conduits (25, 26) which, for a first basic conduit (25), are assigned to aerate the various front zones (9, 10, 11, 12, 13), and, for a second basic conduit (26), to aerate various rear zones (23, 24).

7. Air distribution and routing module of claim 6, **characterised in that** the first basic conduit (25) is selectively connected, by means of a secondary splitter (27), to a first intermediate conduit (28) assigned to distribute air to the front feet zones (13), and to a second intermediate conduit (26) equipped with said primary splitter (6).

8. Air distribution and routing module as claimed in any of the preceding claims, **characterised in that** the primary splitter (6) is subdivided into a first basic splitter (30), which is assigned to the second primary conduit (7), and to a second basic splitter assigned to the first primary conduit (8).

9. Air distribution and routing module as claimed in any of claims 1 to 8, **characterised in that** it is equipped with means of being accommodated inside a transverse beam (2) of the car interior, the latter (2) comprising air vents associated with the various air inlet and exhaust openings.

10. Air distribution and routing module as claimed in any of the preceding claims, **characterised in that**, since the plenum (46) is devised to be housed inside a structural member consisting of a reinforcing beam (47) for the interior of the vehicle, said plenum (46) consists of a plurality of shells (50, 51, 59, 64) that have been assembled together.

11. Air distribution and routing module of claim 10, **characterised in that** the shells (50, 51, 59, 64) are divided into at least right (48) and left (59), or even middle (49) end elements which are conjoined longitudinally.

12. Air distribution and routing module of claim 11, **characterised in that** at least one of said elements (48, 49) comprises at least one swaged portion (52, 63, 64) for the passage of an obstacle that member (47) comprises.

13. Air distribution and routing module of claim 12, **characterised in that**, since the swaged portion (52) is situated in the mid-zone of a first element (49), the latter is split into two longitudinally open half-shells (50, 51), one of which comprises the swaged portion (52).

14. Air distribution and routing module of claim 12, **characterised in that** the edges (55, 56) of the openings (57, 58) of the half-shells (50, 51) are inclined longitudinally.

15. Air distribution and routing module as claimed in any of the preceding claims, **characterised in that**, on the edge of their longitudinal openings, the half-shells (50, 51) comprise cooperating nesting members (53, 54) for assembling them together.

16. Air distribution and routing module of claim 15, **characterised in that** the cooperating nesting members consist of a set of cooperating slideways (53) and rails (54) which are arranged, respectively, along the edge of the openings (57, 58) of the half-shells (50, 51), in order to facilitate the relative guiding thereof during the assembly thereof.

17. Air distribution and routing module as claimed in any of the preceding claims, **characterised in that** the nesting members (53, 54) have non-parallel cooperating surfaces in order to promote tightening and sealing of the assembly of half-shells (50, 51) one to another.

18. Air distribution and routing module of claim 17, **characterised in that** two adjoining elements (48, 49) comprise a swaged portion (63, 65) adjacent to both elements (48, 49), in order to jointly define a seating for the passage of a vehicle member.

19. Air distribution and routing module as claimed in any of claims 10 to 18, **characterised in that** the plenum includes at least one end fitting shell (59) for closing off the corresponding end thereof.

20. Air distribution and routing module of claim 27, **characterised in that** the end fitting shell (59) comprises at least one wing (60, 61) for partitioning at least one other shell (50, 51) so as to form at least one internal conduit in the plenum.

21. Air distribution and routing module of claim 13, **characterised in that** the half-shells (50, 51) are assembled together by a connecting element that is lap-engaged with both of the half-shells (50, 51).

22. Air distribution and routing module of claim 21, **characterised in that** the element for connecting the shells (50, 51) to one another is additionally an element for connecting the shells (50, 51) to the structural member.

23. Air distribution and routing module as claimed in claims 20 and 21, **characterised in that** reinforcements are arranged on at least one of the partitioning wings (60, 61) for receiving the connecting element intended for assembling at least the half-shells (50, 51) together.

24. Structural member for a car interior, **characterised in that** it integrates an air distribution and routing module as claimed in any of the preceding claims.

25. Structural member for a car interior of claim 24, **characterised in that** it comprises:
- a first set of at least one vent (39) which is made through the rear wall thereof, facing the firewall of the car interior, and which is intended to supply air for defrosting the windscreen (9) and for gentle diffusion (14),
- a second set of vents (40) made through rear wall thereof and intended to supply air for demisting the side door windows (10),
- a third set of at least one vent (41) made through the bottom wall thereof and intended to supply air to the plenum (3),
- a fourth set of vents (42( made through the bottom wall thereof and intended to distribute air towards the front and rear feet zones (13, 14), respectively,
- a fifth set of vents (43, 44) made through the front wall thereof, and intended to distribute air towards the various front seat aeration areas (11, 12) of the car interior, and
- a sixth set of vents (45) made through the bottom wall thereof and intended to distribute air towards the rear seat (23) and feet (24) areas.

26. Structural member for a car interior of claim 24, **characterised in that** it comprises:
- a first set of at least one vent (39) which is made through the rear wall thereof, facing the firewall of the car interior, and which is intended to supply air for defrosting the windscreen (9) and for gentle diffusion (14),
- a second set of vents (40) made through rear wall thereof and intended to supply air for demisting the side door windows (10),
- a third set of at least one vent (41) made through the bottom wall thereof and intended to supply air to the plenum (3),
- a fifth set of vents (43, 44) made through the front wall thereof and intended to distribute air towards the various front seat aeration areas (11, 12) of the car interior, and
- a sixth set of vents (45) made through the bottom wall thereof and intended to distribute air towards the rear seat (23) and feet (24) areas.

27. Structural member for a car interior as claimed in any of claims 24 to.26, **characterised in that** it is a transverse reinforcing beam of the car interior.

## Patentansprüche

1. Modul zum Befördern und Verteilen von Luft, die aus der Wärmebaugruppe einer Heiz-, Lüftungs- oder Klimaanlage für Fahrgasträume von Kraftfahrzeugen stammt, die mindestens einen Kasten (3) mit Trennwänden besitzt, der eine Mehrzahl von Leitungen abgrenzt, die jeweils zur Versorgung der einzelnen Bereiche im Fahrgastraum mit Luft dienen, wobei dieser Kasten (3) einen Gesamteinlasskanal (4) begrenzt, der mit der Wärmebaugruppe in Beziehung steht, und mit mindestens einem Hauptverteiler (6) zum selektiven Verteilen der eingelassenen Luft auf die Hauptverteilkanäle (7,8) ausgerüstet ist, die über die jeweiligen Austrittsöffnungen mit mindestens einem der besagten Bereiche im Fahrgastraum, denen sie zugeordnet sind, in Verbindung stehen, **dadurch gekennzeichnet, dass** der besagte Modul im Inneren eines strukturierenden Bauteils eines Kraftfahrzeugs integriert werden kann.

2. Modul zum Befördern und Verteilen von Luft nach Anspruch 1, **dadurch gekennzeichnet, dass** die Hauptverteilkanäle (7,8) mindestens in einen ersten Hauptverteilkanal (8), der mindestens der Luftversorgungsleitung zum Enteisen der Windschutzscheibe (9) und zum Entdunsten der Seitenscheiben (10) zugeordnet ist, sowie einem zweiten Hauptkanal (7), der mindestens der Luftversorgungsleitung für den Frontbereich des Fahrgastraums (11,12) zugeordnet ist, aufgeteilt sind.

3. Modul zum Befördern und Verteilen von Luft nach Anspruch 1, **dadurch gekennzeichnet, dass** der erste Hauptverteilkanal (8) weiterhin einer Luftversorgungsleitung mit sanfter Luftverteilung (14) zugeordnet ist.

4. Modul zum Befördern und Verteilen von Luft nach einem der Ansprüche 2 und 3, **dadurch gekennzeichnet, dass** der zweite Hauptverteilkanal (7) weiterhin einer Luftversorgungsleitung für den Heckbereich des Fahrgastraums (13) zugeordnet ist.

5. Modul zum Befördern und Verteilen von Luft nach einem der Ansprüche 2 bis 4, **dadurch gekennzeichnet, dass** der Gesamteinlasskanal (4) über einen zusätzlichen Verteiler (36) in selektiver Verbindung mit zusätzlichen Kanälen (37, 38) steht, wobei ein erster zusätzlicher Kanal (37) der Luftverteilung in den Fußbereichen (13, 24) vorn und hinten und ein zweiter zusätzlicher Kanal (38) der gemeinsamen Luftverteilung zum ersten und zweiten Hauptverteilkanal (7,8) über den Hauptverteiler (6) zugeordnet ist, wobei die Belüftung des hinteren Sitzbereichs (23) über den zweiten Hauptkanal (7) erfolgt.

6. Modul zum Befördern und Verteilen von Luft nach einem der vorhergehenden Ansprüche, **dadurch gekennzeichnet, dass** der Gesamteinlasskanal (4) in mindestens zwei Elementarkanäle (25, 26) aufgeteilt ist, von denen ein erster Elementarkanal (25) jeweils der Lüftung der verschiedenen Frontbereiche (9, 10, 11, 12, 13) und eine zweiter Elementarkanal (26) der Lüftung der verschiedenen Heckbereiche (23, 24) zugeordnet ist.

7. Modul zum Befördern und Verteilen von Luft nach Anspruch 6, **dadurch gekennzeichnet, dass** der erste Elementarkanal (25) über den sekundären Verteiler (27) selektiv mit einem ersten Zwischenkanal (28), der der Luftverteilung im vorderen Fußbereich (13) zugeordnet ist, und mit einem zweiten Zwischenkanal (29) in Verbindung steht, der mit dem besagten Hauptverteiler (6) ausgerüstet ist.

8. Modul zum Befördern und Verteilen von Luft nach einem der vorhergehenden Ansprüche, **dadurch gekennzeichnet, dass** der Hauptverteiler (6) in einen ersten Elementarverteiler (30), der dem zweiten Hauptkanal (7) zugeordnet ist, und einen zweiten Elementarverteiler, der dem ersten Hauptkanal (8) zugeordnet ist, aufgeteilt ist.

9. Modul zum Befördern und Verteilen von Luft nach einem der Ansprüche 1 bis 8, **dadurch gekennzeichnet, dass** er mit Mitteln zu seinem Einbau im Inneren eines Querträgers (2) des Fahrgastraums ausgestattet ist, wobei letzterer (2) Aussparungen zum Durchlassen der Luft in Bezug auf die verschiedenen Lufteinlass- und Luftauslassöffnungen besitzt.

10. Modul zum Befördern und Verteilen von Luft nach einem der vorhergehenden Ansprüche, **dadurch gekennzeichnet, dass** aufgrund der Tatsache, dass der Kasten (46) dazu ausgelegt ist, im Inneren eines strukturierenden Elements eingebaut zu werden, das aus einem Verstärkungsträger (47) des Fahrgastraums des Kraftfahrzeugs besteht, der Kasten (46) aus einer Mehrzahl von Schalen (50, 51, 59, 64) besteht, die durch Zusammenfügen miteinander verbunden sind.

11. Modul zum Befördern und Verteilen von Luft nach Anspruch 10, **dadurch gekennzeichnet, dass** die Schalen (50, 51, 59, 64) in Elemente aufgeteilt sind die mindestens rechte (48) und linke (49) Enden bzw. auch mittlere, in Längsrichtung anstoßende Abschnitte bilden.

12. Modul zum Befördern und Verteilen von Luft nach Anspruch 11, **dadurch gekennzeichnet, dass** mindestens eines der besagten Elemente ((48, 49) mindestens eine Vertiefung (52, 63, 64) zum Durchlassen eines Hindernisses besitzt, das der Träger (47) aufweist.

13. Modul zum Befördern und Verteilen von Luft nach Anspruch 12, **dadurch gekennzeichnet, dass** aufgrund der Lage der Vertiefung (52) im mittleren Bereich eines letzten Elementes (49) dieses in zwei in Längsrichtung geöffnete Halbschalen (50, 51) aufgeteilt ist, von denen die eine (50) die besagte Vertiefung (52) aufweist.

14. Modul zum Befördern und Verteilen von Luft nach Anspruch 12, **dadurch gekennzeichnet, dass** die Ränder (55, 56) der Öffnungen (57, 58) der Halbschalen (50, 51) in Längsrichtung schräg geneigt sind.

15. Modul zum Befördern und Verteilen von Luft nach einem der Ansprüche 13 und 14, **dadurch gekennzeichnet, dass** die Halbschalen (50, 51) am Rand ihrer Längsöffnungen zusammenwirkende Steckelemente (53, 54) besitzen, die zum Zusammenfügen der Halbschalen dienen.

16. Modul zum Befördern und Verteilen von Luft nach Anspruch 15, **dadurch gekennzeichnet, dass** die zusammenwirkenden Steckelemente aus einem Satz zusammenwirkender Gleitkufen (53) und Gleitschienen (54) bestehen, die jeweils an der Längskante der Öffnungen (57, 58) der Halbschalen (50, 51) angebracht sind, um die Führung bei deren Zusammenfügen zu erleichtern.

17. Modul zum Befördern und Verteilen von Luft nach einem der Ansprüche 15 und 16, **dadurch gekennzeichnet, dass** die Steckelemente (53, 54) nicht parallele zusammenwirkende Flächen besitzen, um das Zusammenpressen und die Dichtheit beim Zusammenfügen der Halbschalen (50, 51) gegeneinander zu fördern.

18. Modul zum Befördern und Verteilen von Luft nach Anspruch 17, **dadurch gekennzeichnet, dass** die beiden benachbarten Elemente (48, 49) je eine Vertiefung (63, 65) aufweisen, die an dem einen und anderen der beiden Elemente (48, 49) angrenzen, um gemeinsam eine Aufnahme zum Durchführen eines Elements des Kraftfahrzeugs zu umschreiben.

19. Modul zum Befördern und Verteilen von Luft nach einem der Ansprüche 10 bis 18, **dadurch gekennzeichnet, dass** der Kasten mindestens eine Endschale (59) zum Verschließen des betreffenden Endes besitzt.

20. Modul zum Befördern und Verteilen von Luft nach Anspruch 27, **dadurch gekennzeichnet, dass** die Endschale (59) mindestens einen Schenkel (60, 61) besitzt, um eine Trennwand zu mindestens einer weiteren Schale (50, 51) und damit mindestens einen inneren Kanal in dem Kasten zu bilden.

21. Modul zum Befördern und Verteilen von Luft nach Anspruch 13, **dadurch gekennzeichnet, dass** die Halbschalen (50, 51) durch ein Teil miteinander verbunden werden, das rittlings auf der einen oder anderen Halbschale (50, 51) aufgesetzt ist.

22. Modul zum Befördern und Verteilen von Luft nach Anspruch 21, **dadurch gekennzeichnet, dass** das Verbindungsteil für die beiden Halbschalen (50, 51) weiterhin auch ein Teil zur Verbindung zwischen den Halbschalen (50, 51) und dem strukturierenden Element ist.

23. Modul zum Befördern und Verteilen von Luft nach Anspruch 20 und 21, **dadurch gekennzeichnet, dass** in mindestens einem der Schenkel (60, 61) Verstärkungen angebracht sind, um mindestens ein Element aufzunehmen, das dazu dient, die beiden Halbschalen (50, 51) miteinander zu verbinden.

24. Strukturierendes Element eines Fahrgastraums eines Fahrzeugs, **dadurch gekennzeichnet, dass** in ihm ein Modul zum Befördern und Verteilen von Luft nach einem der vorhergehenden Ansprüche integriert ist.

25. Strukturierendes Element eines Fahrgastraums eines Fahrzeugs nach Anspruch 24, **dadurch gekennzeichnet, dass** es
- einen ersten Satz mit mindestens einer Aussparung (39) besitzt, die auf seiner Rückseite in Richtung Schürze des Fahrgastraums angebracht ist und dazu dient die Enteisungsleitung der Windschutzscheibe (9) und die Luftversorgungsleitung für sanfte Luftverteilung (14) mit Luft zu versorgen,
- einen zweiten Satz von Aussparungen (40) besitzt, die auf seiner Rückseite angebracht sind und dazu dienen, die Entdunstungsleitung der Seitenscheiben (10) mit Luft zu versorgen,
- einen dritten Satz mit mindestens einer Aussparung (41) besitzt, die auf seiner Unterseite angebracht ist und dazu dienet den Kasten (3) mit Luft zu versorgen,
- einen vierten Satz von Aussparungen (42) besitzt, die auf seiner Unterseite angebracht sind und dazu dienen, die vorderen und hinteren Fußbereiche (13, 24) mit Luft zu versorgen,
- einen fünften Satz von Aussparungen (43, 44) besitzt, die auf seiner Vorderseite angebracht sind und dazu dienen, die vorderen Sitzbereiche (11, 12) im Fahrgastraum mit Luft zu versorgen, und
- einen sechsten Satz von Aussparungen (45) besitzt, die auf seiner Unterseite angebracht sind und dazu dienen, die hinteren Sitzbereiche (23) und Fußbereiche (24) mit Luft zu versorgen.

26. Strukturierendes Element eines Fahrgastraums eines Fahrzeugs nach Anspruch 24, **dadurch gekennzeichnet, dass** es
- einen ersten Satz mit mindestens einer Aussparung (39) besitzt, die auf seiner Rückseite in Richtung Schürze des Fahrgastraums angebracht ist und dazu dient die Enteisungsleitung der Windschutzscheibe (9) und die Luftversorgungsleitung für sanfte Luftverteilung (14) mit Luft zu versorgen,
- einen zweiten Satz von Aussparungen (40) besitzt, die auf seiner Rückseite angebracht sind und dazu dienen, die Entdunstungsleitung der Seitenscheiben (10) mit Luft zu versorgen,
- einen dritten Satz mit mindestens einer Aussparung (41) besitzt, die auf seiner Unterseite angebracht ist und dazu dienet den Kasten (3) mit Luft zu versorgen,
- einen fünften Satz von Aussparungen (43, 44) besitzt, die auf seiner Vorderseite angebracht sind und dazu dienen, die vorderen Sitzbereiche (11, 12) im Fahrgastraum mit Luft zu versorgen, und
- einen sechsten Satz von Aussparungen (45) besitzt, die auf seiner Unterseite angebracht sind und dazu dienen, die hinteren Sitzbereiche (23) und Fußbereiche (24) mit Luft zu versorgen.

27. Strukturierendes Element eines Fahrgastraums eines Fahrzeugs nach einem der Ansprüche 24 bis 26, **dadurch gekennzeichnet, dass** es ein Querträger zur Verstärkung des Fahrgastraums des Fahrzeugs ist.
